# EUROPÄISCHE PATENTANMELDUNG

(11) **EP 4 099 639 A1**
(43) Veröffentlichungstag der Anmeldung: **07.12.2022**
(21) Anmeldenummer: 22174358.6
(22) Anmeldetag: 19.05.2022
(51) Int. Cl.: H04L 12/28, H04L 9/40, F24F 11/00

(54) **VERFAHREN ZUR KOMMUNIKATION EINES HEIZGERÄTES MIT EINEM NETZWERK**

(30) Priorität: 31.05.2021 DE 102021113961
(71) Anmelder: Vaillant GmbH, 42859 Remscheid NRW (DE)
(72) Erfinder: Ebenfeld, Sven, 45525 Hattingen (DE); Gober, Thomas, 51375 Leverkusen (DE)
(74) Vertreter: Popp, Carsten

(57) **Zusammenfassung**

Das erfindungsgemäße Verfahren zur Kommunikation eines Heizgerätes (1) mit einem Netzwerk (3) über ein Gateway-Steuergerät (2) umfassend zumindest die folgenden Schritte: a) Empfangen einer eingehenden Anweisung (5) umfassend zumindest ein Merkmal durch das Gateway-Steuergerät (2); b) Vergleichen des mindestens einen Merkmales der Anweisung (5) mit mindestens einer Referenzliste; c) Weiterleiten der geprüften Anweisung (6) an das Heizgerät (1), sofern das mindestens eine Merkmal in der Referenzliste verzeichnet ist. Das Verfahren kann insbesondere auf einem hier gleichfalls beschriebenen Gateway-Steuergerät (2) ausgeführt werden. Bevorzugt weist ein Heizgerät (1) ein derartiges Gateway-Steuergerät (2) auf, über das jegliche Kommunikation des Heizgerätes (1) mit einem Netzwerk (3) erfolgt.

## Beschreibung

Die Erfindung betrifft ein Verfahren zur Kommunikation eines Heizgerätes mit einem Netzwerk, ein Computerprogramm, ein Speichermedium, ein Gateway-Steuergerät und ein Heizgerät.

Häufig verfügen Heizgeräte über ein Bussystem zur internen sowie zur Kommunikation mit anderen Geräten, beispielsweise Eingabegeräten. Zunehmend werden Heizgeräte auch mit einem Netzwerk, insbesondere dem Internet verbunden, zum Beispiel um eine Steuerung des Heizgerätes von unterwegs zu ermöglichen oder auch um Betriebsdaten des Heizgerätes an einen Servicebetrieb oder den Hersteller zu übermitteln.

Ein vielfach genutztes Bussystem für Heizgeräte ist das eBus-System. Mit diesem System wird ermöglicht, alle Funktionen des Heizgerätes zu steuern, das Heizgerät mit Eingabe- und anderen lokalen Geräten zu verbinden und auch eine Anbindung an ein Netzwerk, wie das Internet, herzustellen.

Nachteilig hat sich gezeigt, dass Heizgeräte durch eine Anbindung an ein Netzwerk mutwilligen Manipulationen und bösartigen Anweisungen ausgesetzt sind.

Hiervon ausgehend ist es Aufgabe der Erfindung, ein Verfahren zur Kommunikation eines Heizgerätes mit einem Netzwerk bereitzustellen, das die geschilderten Probleme des Standes der Technik zumindest teilweise überwindet und insbesondere Schäden an einem Heizgerät durch Manipulationen oder bösartigen Anweisungen vermeidet. Des weiteren sollen zur Lösung der Aufgaben ein Computerprogramm, ein Gateway-Steuergerät und ein Heizgerät angegeben werden.

Zudem soll das Verfahren einfach in bestehende Heizgeräte-Netzwerke implementierbar sein.

Diese Aufgaben werden gelöst durch die Merkmale der unabhängigen Patentansprüche. Weitere vorteilhafte Ausgestaltungen der hier vorgeschlagenen Lösung sind in den unabhängigen Patentansprüchen angegeben. Es wird darauf hingewiesen, dass die in den abhängigen Patentansprüchen aufgeführten Merkmale in beliebiger, technologisch sinnvoller, Weise miteinander kombiniert werden können und weitere Ausgestaltungen der Erfindung definieren. Darüber hinaus werden die in den Patentansprüchen angegebenen Merkmale in der Beschreibung näher präzisiert und erläutert, wobei weitere bevorzugte Ausgestaltungen der Erfindung dargestellt werden.

Hierzu trägt ein Verfahren zur Kommunikation eines Heizgerätes mit einem Netzwerk über ein Gateway-Steuergerät bei, umfassend zumindest die folgenden Schritte:
a) Empfangen einer eingehenden Anweisung durch das Gateway-Steuergerät, wobei die Anweisung mindestens ein Merkmal umfasst;
b) Vergleichen des mindestens einen Merkmals der Anweisung mit mindestens einer Referenzliste,
c) Weiterleiten der (geprüften) Anweisung an das Heizgerät, sofern das mindestens eine Merkmal in der Referenzliste verzeichnet ist.

Die Schritte a) - c) werden dabei zumindest einmal in der angegeben Reihenfolge durchgeführt. Das Verfahren kann insbesondere auf einem hier gleichfalls beschriebenen Gateway-Steuergerät ausgeführt werden. Bevorzugt weist ein Heizgerät ein derartiges Gateway-Steuergerät auf, über das jegliche Kommunikation des Heizgerätes mit einem Netzwerk erfolgt.

Das vorgeschlagene Verfahren ist mit jeglichem Heizgerät durchführbar, das mit einem Netzwerk zu verbinden ist. So kann das Heizgerät beispielsweise ein Gas- oder Ölheizgerät sein, oder auch eine Wärmepumpenanlage.

Gemäß einem Schritt a) erfolgt ein Empfangen einer eingehenden Anweisung durch das Gateway-Steuergerät. Die Anweisung wird durch das Gateway-Steuergerät gespeichert.

Eine Anweisung bedeutet hier eine Nachricht, die das Heizgerät zu einer Aktion veranlasst, beispielsweise ein eBus Telegramm. eBus ist ein Schnittstellenprotokoll, das häufig bei Heizgeräten Anwendung findet. Es beruht auf der seriellen Schnittstellentechnik und baut auf einer Leitung mit zwei Drähten auf. Das Heizgerät kann auch Nachrichten über das Gateway-Steuergerät und ein Netzwerk versenden, beispielsweise Zustandsberichte oder Betriebsparameter.

Gemäß einem Schritt b) erfolgt ein Vergleichen mindestens eines Merkmales der Anweisung mit mindestens einer Referenzliste. Die Referenzliste ist auf einer Speichereinheit, bevorzugt einer Speichereinheit des Gateway-Steuergerätes hinterlegt und enthält Informationen zu bestimmten Merkmalen der Anweisungen. Bei dem hier vorgeschlagenen Vergleichen eines Merkmals der Anweisung mit mindestens einer Referenzliste wird ein Merkmal, bzw. eine unter einem Merkmal hinterlegte Information mit der in der Anweisung enthaltenen Information zu diesem Merkmal verglichen. Der Vergleich ermöglicht eine Einschätzung, ob die eingegangene Anweisung als sicher einzustufen ist.

Gemäß einer bevorzugten Ausgestaltung kann das Merkmal eine Absenderadresse, eine Zieladresse, ein Primärblock, ein Sekundärblock und/ oder ein Datenblock der Anweisung sein.

Gemäß einem Schritt c) erfolgt ein Weiterleiten der geprüften Anweisung an das Heizgerät, sofern das mindestens eine Merkmal in der Referenzliste verzeichnet ist. "Geprüft" gilt eine Anweisung dann, wenn aus dem Vergleich gemäß Schritt b) hervorgeht, dass die Anweisung durch die Referenzliste verifiziert bzw. bestätigt wurde. Der Umstand, dass die mindestens eine Information zu mindestens einem Merkmal in der Referenzliste enthalten ist, führt zu einer Einstufung der Anweisung als sicher. Die Anweisung kann nun an das Heizgerät weitergeleitet werden, beispielsweise vom Gateway-Steuergerät an ein Steuergerät des Heizgerätes.

Es versteht sich, dass auch mehrere Informationen zu mehreren Merkmalen verglichen werden können, so kann vorteilhaft die Kommunikation des Heizgerätes mit einem Netzwerk noch sicherer gestaltet werden.

Sofern ein Vergleich des mindestens einen Merkmals mit der Referenzliste fehlschlägt, kann die Anweisung nicht an das Heizgerät weiter geleitet werden. Es muss vielmehr davon ausgegangen werden, dass die Anweisung ein Schädigungspotential hat. Gemäß einer bevorzugten Ausgestaltung des Verfahrens kann das Gateway-Steuergerät Anweisungen, die einem Vergleich gemäß Schritt b) nicht standgehalten haben, an eine Einrichtung zur Prüfung der Anweisung übermitteln, beispielsweise dem Hersteller.

Gemäß einer bevorzugten Ausgestaltung des Verfahrens kann bei einer erstmaligen Verfahrensdurchführung ein verfahrensdurchführendes Computerprogramm und/ oder die mindestens eine Referenzliste verifiziert werden. Unter erstmaliger Verfahrensdurchführung kann eine erstmalige Verfahrensdurchführung nach einem Neustart des Systems, beispielsweise durch eine Inbetriebnahme des Heizgerätes verstanden werden. Das Verifizieren kann beispielsweise erfolgen, indem eine Signatur des verfahrensausführenden Computerprogrammes und/ oder der mindestens einen Referenzliste überprüft wird. Aus dem Stand der Technik sind eine Vielzahl von Möglichkeiten zur Überprüfung bekannt, so könnten beispielsweise auch Prüfsummen von Anweisungen, Merkmalen von Anweisungen, der Referenzliste bzw. von Einträgen in der Referenzliste verglichen werden. Die Verifikation wird bevorzugt mittels kryptographischer Verfahren zur Prüfung von Integrität und Authentizität durchgeführt.

Gemäß einer weiteren bevorzugten Ausgestaltung des Verfahrens kann für den Fall, dass oben beschriebenes Verifizieren bei einer erstmaligen Verfahrensdurchführung fehlschlägt, eine Weiterleitung jeglicher Anweisungen an das Heizgerät von dem Gateway-Steuergerät blockiert werden. Vorteilhaft kann so ein Umgehen des erfindungsgemäßen Verfahrens durch ein Ändern des verfahrensdurchführenden Computerprogrammes oder auch der mindestens einen Referenzliste unterbunden werden.

Nach einem weiteren Aspekt wird auch ein Computerprogramm vorgeschlagen, welches zur (zumindest teilweisen) Durchführung eines hier vorgestellten Verfahrens eingerichtet ist. Dies betrifft mit anderen Worten insbesondere ein Computerprogramm(-produkt), umfassend Befehle, die bei der Ausführung des Programms durch einen Computer diesen veranlassen, ein hier beschriebenes Verfahren auszuführen.

Nach einem weiteren Aspekt wird auch ein maschinenlesbares Speichermedium vorgeschlagen, auf dem das Computerprogramm gespeichert ist.

Regelmäßig handelt es sich bei dem maschinenlesbaren Speichermedium um einen computerlesbaren Datenträger.

Nach einem weiteren Aspekt wird auch ein Gateway-Steuergerät vorgeschlagen, dass dazu eingerichtet sein kann, ein hier vorgeschlagenes Verfahren bzw. Computerprogramm durchzuführen. Das Gateway- Steuergerät kann dabei ein Regel- und Steuergerät eines Heizgerätes sein. Dies kann jedoch Nachteile hinsichtlich der Sicherheit des Heizgerätes vor schädigenden Anweisungen aus einem Netzwerk haben. Daher wird bevorzugt eine hardwareseitige Trennung vorgeschlagen. Durch eine Ausführung des Gateway-Steuergeräts als selbstständige Hardware-Einheit zwischen Heizgerät und Netzwerk kann eine Vertrauenszone zwischen Gateway-Steuergerät und Heizgerät geschaffen und eine Ausführung schädigender Anweisungen durch das Heizgerät oder Manipulationen können erheblich erschwert werden.

Das Gateway-Steuergerät kann beispielsweise einen Prozessor aufweisen bzw. über diesen verfügen. In diesem Zusammenhang kann der Prozessor beispielsweise das auf einem Speicher (des Gateway-Steuergeräts) hinterlegte Verfahren ausführen. Bevorzugt ist auf dem Speicher auch die mindestens eine Referenzliste hinterlegt.

Nach einem weiteren Aspekt wird auch ein Heizgerät mit einem hier vorgestellten Gateway-Steuergerät vorgeschlagen.

Hier werden somit ein Verfahren zur Kommunikation eines Heizgerätes mit einem Netzwerk, ein Computerprogramm, ein Gateway-Steuergerät und ein Heizgerät angegeben, welche die mit Bezug auf den Stand der Technik geschilderten Probleme zumindest teilweise lösen. Insbesondere tragen das Verfahren, das Computerprogramm, das Gateway-Steuergerät und das Heizgerät jeweils zumindest dazu bei, Schäden am Heizgerät durch Anweisungen aus einem Netzwerk zu verhindern. Zudem können auch Manipulationen an einem verfahrensdurchführenden Computerprogramm erkannt und erkannt bzw. verhindert werden.

Weiter vorteilhaft können das Verfahren, das Computerprogramm und das Gateway-Steuergerät auch problemlos an bestehenden Anlagen nachgerüstet werden.

Die Erfindung sowie das technische Umfeld werden nachfolgend anhand der beiliegenden Figuren näher erläutert. Es ist darauf hinzuweisen, dass die Erfindung durch die angeführten Ausführungsbeispiele nicht beschränkt werden soll. Insbesondere ist es, soweit nicht explizit anders dargestellt, auch möglich, Teilaspekte der in den Figuren erläuterten Sachverhalte zu extrahieren und mit anderen Bestandteilen und Erkenntnissen aus der vorliegenden Beschreibung zu kombinieren. Insbesondere ist darauf hinzuweisen, dass die Figuren und insbesondere die dargestellten Größenverhältnisse nur schematisch sind. Es zeigen:
Figur 1: eine schematische Darstellung eines Heizgerätes mit einem hier vorgeschlagenen Gateway-Steuergerät, und
Figur 2: einen Ablauf eines hier vorgeschlagenen Verfahrens.

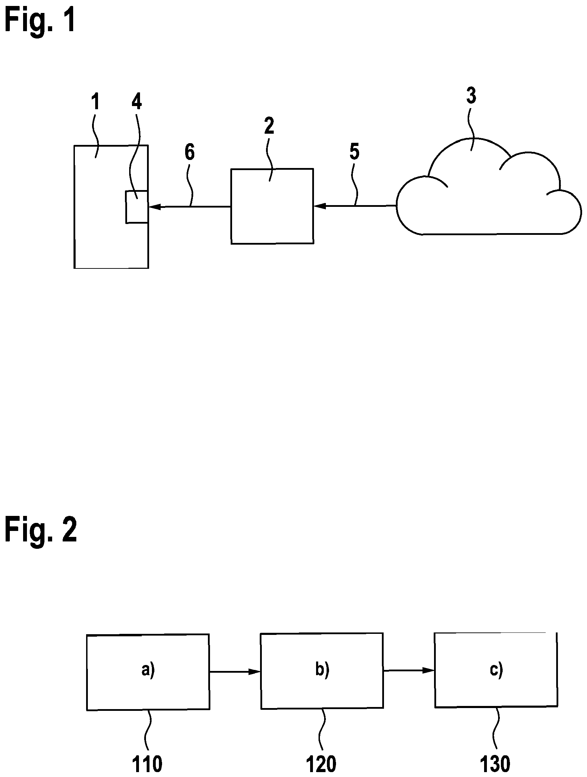

Figur 1 zeigt eine schematische Darstellung eines Heizgerätes 1 mit einem hier vorgeschlagenen Gateway-Steuergerät 2, das zur Durchführung eines hier vorgeschlagenen Verfahrens eingerichtet ist.

Das Gateway- Steuergerät 2 ist mit einem Netzwerk 3 verbunden, das insbesondere das Internet sein kann und empfängt alle an das Heizgerät 1 gerichteten Anweisungen 5. Nach einer Durchführung des hier vorgeschlagenen Verfahrens kann das Gateway-Steuergerät 2 überprüfte Anweisungen 6 an ein Steuergerät 4 des Heizgerätes 1 weiterleiten. Das Steuergerät 4 des Heizgerätes 1 kann die überprüften Anweisungen 6 ausführen.

Figur 2 zeigt beispielhaft und schematisch einen Ablauf eines hier vorgeschlagenen Verfahrens. Die Verfahrensschritte a) bis c) sind mittels Blöcken 110, 120 und 130 dargestellt.

In Block 110 erfolgt gemäß Schritt a) ein Empfangen einer eingehenden Anweisung 5 durch das Gateway-Steuergerät 2. Die Anweisung kann bevorzugt ein eBus-Telegramm sein. Die Anweisung 5 kann aus einem Netzwerk 3 an das Gateway-Steuergerät 2 übermittelt werden, wobei insbesondere das Netzwerk 3 insbesondere das Internet sein kann.

In Block 120 erfolgt gemäß Schritt b) ein Vergleichen mindestens einer Information zu mindestens einem Merkmal der Anweisung 5 mit zumindest einer Referenzliste. Das Merkmal kann beispielsweise ein Absender der Nachricht sein, so dass in diesem Schritt eine Verifikation eines vertrauenswürdigen Absenders erfolgt. Das Merkmal kann weiter beispielhaft ein Sicherheitscode sein, der in der in Schritt a) empfangenen Anweisung an definierter Stelle enthalten und mit der Referenzliste zu vergleichen ist.

In Block 130 gemäß Schritt c) kann ein Weiterleiten der geprüften Anweisung 6 an das Heizgerät 1, erfolgen, sofern die mindestens eine Information zu einem Merkmal in der Referenzliste verzeichnet ist. Die Weiterleitung kann beispielsweise an ein Steuergerät 4 des Heizgerätes 1 erfolgen, welches die Anweisung dann ausführen kann.

### Bezugszeichenliste

- 1: Heizgerät
- 2: Gateway-Steuergerät
- 3: Netzwerk
- 4: Steuergerät
- 5: Anweisungen
- 6: geprüfte Anweisungen

## Patentansprüche

1. Verfahren zur Kommunikation eines Heizgerätes (1) mit einem Netzwerk (3) über ein Gateway-Steuergerät (2) umfassend zumindest die folgenden Schritte:
a) Empfangen einer eingehenden Anweisung (5) umfassend zumindest ein Merkmal durch das Gateway-Steuergerät (2),
b) Vergleichen des mindestens einen Merkmals der Anweisung (5) mit zumindest einer Referenzliste,
c) Weiterleiten der geprüften Anweisung (6) an das Heizgerät (1), sofern das mindestens eine Merkmal in der Referenzliste verzeichnet ist.

2. Verfahren nach Anspruch 1, wobei das mindestens eine Merkmal in Schritt b) eine Absenderadresse, eine Zieladresse, ein Primärblock, ein Sekundärblock und/ oder ein Datenblock der Anweisung (5) ist.

3. Verfahren nach einem der vorangehenden Ansprüche, wobei die eingehende Anweisung (5) ein eBus Telegramm ist.

4. Verfahren nach einem der vorangehenden Ansprüche, wobei bei einem Systemstart das verfahrensausführende Computerprogramm und die hinterlegten Referenzliste auf Manipulationen überprüft werden.

5. Verfahren nach Anspruch 4, wobei bei einem Feststellen einer Manipulation beim Systemstart eine Weiterleitung von Anweisungen (5) an das Heizgerät (1) durch das Gateway-Steuergerät (2) blockiert wird.

6. Computerprogramm, welches zur Durchführung eines Verfahren nach einem der vorangehenden Ansprüche eingerichtet ist.

7. Computerprogramm nach Anspruch 6, wobei vor einem Aktualisieren des Computerprogrammes Sicherheitsmerkmale der Aktualisierung geprüft werden.

8. Maschinenlesbares Speichermedium auf dem ein Computerprogramm nach Anspruch 7 oder 6 gespeichert ist.

9. Gateway-Steuergerät (2) eingerichtet zur Durchführung eines Verfahrens nach einem der Ansprüche 1 bis 5 oder aufweisend ein Computerprogramm nach einem der Ansprüche 7 oder 6.

10. Heizgerät (1) aufweisend ein Gateway-Steuergerät (2) nach Anspruch 9.

11. Heizgerät (1) nach Anspruch 10, wobei das Gateway-Steuergerät (2) zwischen einem Steuergerät (4) des Heizgerätes (1) und einem Netzwerkanschluss (3) angeordnet ist.
